Europäisches Patentamt

European Patent Office

Office européen des brevets

(11) Publication number: **0 615 887 A1**

# EUROPEAN PATENT APPLICATION

(21) Application number: **94200466.4**

(22) Date of filing: **24.02.94**

(51) Int. Cl.5: **B60R 21/00**

(30) Priority: **18.03.93 US 33736**

(43) Date of publication of application:
**21.09.94 Bulletin 94/38**

(84) Designated Contracting States:
**DE ES FR SE**

(71) Applicant: **DELCO ELECTRONICS CORPORATION**
**700 East Firmin Street**
**Kokomo Indiana 46902 (US)**

(72) Inventor: **Ravas, Richard Joseph, Jr.**
**4800 Pavalion Drive**
**Kokomo, Indiana 46902 (US)**
Inventor: **Gose, Mark Wendell**
**722 South 400 East**
**Kokomo, Indiana 46902 (US)**
Inventor: **Kincaid, Kevin Dale**
**1401 Ruhl Garden Court**
**Kokomo, Indiana 46902 (US)**

(74) Representative: **Jehan, Robert et al**
**Patent Section,**
**1st Floor,**
**Gideon House,**
**28 Chapel Street**
**Luton, Bedfordshire LU1 2SE (GB)**

(54) **Supplemental inflatable restraint system.**

(57) In a motor vehicle, an apparatus comprises a vehicle voltage supply (20) coupled to a supply node (34) through a diode (30), a step-up voltage supply (22) coupled between the vehicle voltage supply (20) and a single reserve capacitor (26), a diode (32) coupling the single reserve capacitor (26) to the supply node (34), a regulated voltage supply (36) coupled to the supply node (34) and supplying power to a microprocessor controller (38), a controllable current source (40) coupled to and receiving power from the supply node (34) and coupled to the microprocessor controller (38) through one or more control lines (39), and a deployment squib (42) in series with the controllable current source (40). The microprocessor (38) controls the controllable current source (40) to provide electric current from the supply node (34) to the squib (42) to deploy the supplemental inflatable restraint system, wherein the single reserve capacitor (26) supplies reserve energy to the regulated voltage supply (36), the controllable current source (40), the microprocessor controller (38) and the squib (42).

FIG. 2

EP 0 615 887 A1

Rank Xerox (UK) Business Services
(3.10/3.09/3.3.4)

This invention relates to a supplemental inflatable restraint system and to a method of deploying a supplemental inflatable restraint.

The subject of this invention is related to our co-pending European patent application 93202723.8.

In some existing supplemental inflatable restraint systems, one or more electromechanical sensors sense sudden deceleration of a vehicle and close electrical contacts to initiate desired deployment of a supplemental inflatable restraint. When the contacts close, current flows through the contacts and through the supplemental inflatable restraint deployment squib. To ensure rapid deployment of the restraint, a high level of current flows through the sensors and squib. The high level of current often causes arcing of the sensor, which may damage the electromechanical sensor and make it unsuitable for re-use.

In the case of disconnection of the battery during an event for which deployment of the supplemental inflatable restraint system is desired, reserve capacitors are used as temporary energy storage devices to supply the energy necessary to deploy the supplemental inflatable restraint. Typically, several large reserve capacitors are provided. For example, a supplemental inflatable restraint system may have one reserve capacitor for the control unit and one for each squib to be activated.

The present invention seeks to provide an improved supplemental inflatable restraint system and method of deploying such a system.

According to an aspect of the present invention, there is provided a supplemental inflatable restraint system as specified in claim 1.

According to another aspect of the present invention, there is provided a method of deploying a supplemental inflatable restraint system as specified in claim 2.

It is possible in some embodiments to provide a supplemental inflatable restraint system with a reusable electromechanical actuator. It is also possible to provide a supplemental inflatable restraint system with improved energy management enabling both a reduction in the number of capacitors necessary and a reduction in the size of the capacitors required by the system without a reduction in system performance.

In preferred embodiments, it is possible to control the supplemental inflatable restraint system without causing arcing of the electromechanical sensor.

Preferably, the apparatus controls current flow through a deployment squib by use of a switchable current source controlled by a control line, removing the final switching of the current from the contacts of the electromechanical actuator to the switchable current source, efficiently using energy of the system storage capacitor by pulsing the controllable current source for a limited time period, which limited time period is long enough to ensure deployment of the supplemental inflatable restraint system, but of finite duration to prevent unnecessary discharging of the storage capacitor.

Advantageously, the apparatus can prevent unnecessary drainage of the reserve capacitor during deployment of a supplemental inflatable restraint system.

Preferably, the apparatus includes a microprocessor controller and one or more supplemental inflatable restraint deployment circuits all utilising a single capacitor for energy storage and use when the battery becomes disconnected.

In an embodiment, the apparatus provides a multiple deployment supplemental inflatable restraint system with staggered deployment of the supplemental inflatable restraints, such staggered deployment allowing use of a smaller reserve capacitor and/or reserve capacitor voltages and providing more efficient use of the energy storage device.

In a preferred embodiment, the apparatus comprises a vehicle supply voltage source and means coupled between the vehicle supply voltage source and an energy reserve capacitor for generating a high voltage level to which the energy reserve capacitor normally charged. A first diode may be coupled between the reserve capacitor and a supply node and a second diode may be coupled between the vehicle voltage supply and the supply node. A series circuit coupled between the supply node and ground may comprise a controllable current source in series with a squib. A regulated voltage supply may be coupled to the first node and supplies a regulated voltage to a microprocessor controller. The microprocessor controller may have a control output coupled to the controllable current source and may comprise means for controlling the controllable current source to deploy the supplemental inflatable restraint system when desired, wherein, in the event of disconnection of vehicle supply voltage source, the reserve capacitor can power the regulated voltage supply, the microprocessor controller, the controllable current source and the squib.

Preferably, the apparatus comprises a reserve capacitor, a first controllable current source in series with a first squib and a second controllable current source in series with a second squib. A microprocessor controller responsive to a sudden deceleration of the vehicle may comprise means for pulsing the first controllable current source to deploy the first supplemental inflatable restraint, means for delaying deployment of the second current source for a predetermined time period after the first current source is shut off and means for pulsing the second controllable current source deploying the second supplemental inflatable restraint after the delay.

The apparatus may comprise an energy reserve capacitor and a series circuit coupled to the energy reserve capacitor, the series circuit comprising a controllable regulated current source, a deployment squib and an electromechanical actuator.

An embodiment of the present invention is described below, by way of example only, with reference to the accompanying drawings, in which:

Figure 1 is a circuit diagram of an embodiment of part of a supplemental inflatable restraint system;

Figure 2 is a circuit diagram of an embodiment of supplemental restraint system;

Figure 3A is a graph showing the voltage across a reserve capacitor of the system of Figure 2 during a deployment event in which vehicle supply voltage is interrupted;

Figure 3B is a graph showing a controlled pulse for controlling a current source of the system of Figure 2;

Figure 4 is a circuit diagram of a second embodiment of part of a supplemental restraint system;

Figure 5 is a flow chart for use by the supplemental inflatable restraint system of Figure 2;

Figure 6 is a circuit diagram of an embodiment a multiple supplemental inflatable restraint deployment system;

Figures 7 and 8 are graphs showing energy management of a reserve capacitor during deployment of the multiple supplemental inflatable restraint of Figure 6;

Figure 9 is a flow chart for use by the control unit of the multiple supplemental inflatable restraint of Figure 6; and

Figure 10 is a circuit diagram of an embodiment of controllable current source.

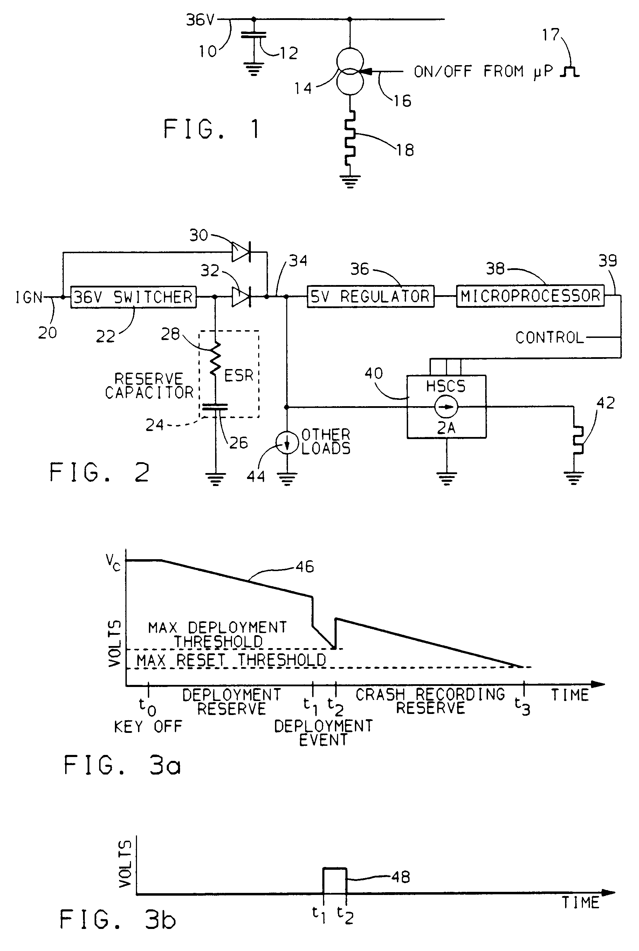

Referring to Figure 1, the apparatus shown includes reserve capacitor 12 normally charged to a predetermined voltage level, for example 36 volts, through a power supply coupled to line 10. The predetermined voltage level is set to ensure storage of sufficient energy in capacitor 12 to operate the supplemental inflatable restraint system for a short time period after disconnection of the power supply during a deployment operation.

A series circuit comprising controllable current source 14 and squib 18 is coupled across capacitor 12 and powered thereby in the event of disconnection of the battery. Controllable current source 14 has a line 16 coupled to a control unit (not shown) and, in response to a control signal on line 16, is switchable between supplying no current to squib 18 and supplying a regulated activation current to squib 18 to deploy the supplemental inflatable restraint system.

Controllable current source 14 is controlled by a pulse 17, on line 16, of predetermined duration. In response to the pulse of predetermined duration, current source 14 supplies current to squib 18 for a predetermined amount of time, which current and predetermined amount of time are sufficient to activate squib 18 and deploy the supplemental inflatable restraint system if necessary. Through use of a predetermined pulse time and a controllable current source of known characteristic, the amount of power used by capacitor 12 during deployment can be predetermined and can be more efficiently managed, allowing for capacitor 12 to be of smaller size due to elimination of wasted reserve energy.

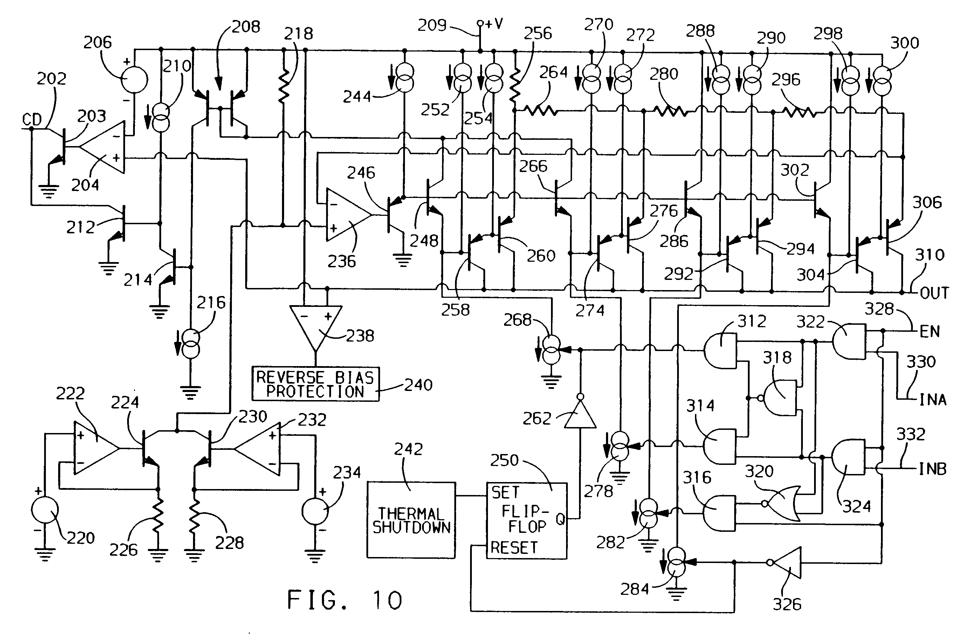

Controllable current source 14 may be any controllable current source such as a transistor, a transmission gate or, preferably, a regulated current source as shown in Figure 10 and described in further detail below. The current source shown in Figure 10 is controllable by several control lines coupled to a control unit or microprocessor and provides a regulated steady current, for example 2 amperes, from energy stored in the reserve capacitor. The duration of current supply is determined by the size and initial voltage level of the energy reserve capacitor. Suitable implementations have used both 22 volts and 36 volts, but the initial voltage level of the reserve capacitor may be set at any level as desired by a system designer.

Referring now to Figure 2, the embodiment of control circuit shown includes a single reserve capacitor 24 as the reserve energy source for 5 volt regulator 36, a microprocessor 38, a current source 40 and a squib 42.

In the apparatus shown, the vehicle supply voltage is supplied on line 20 from the vehicle power supply and coupled through diode 30 to node 34 from which the 5 volt regulator 36 and the controllable current source 40 receive power. Reference 44 indicates that other loads, such as further deployment loops or diagnostic circuitry, may be attached to node 34. The regulated power supply 36 provides a regulated 5 volts to microprocessor 38, which controls current source 40 through line 39.

Voltage step-up circuit 22 is coupled between ignition voltage source on line 20 and reserve capacitor 24, here represented by its internal capacitance 26 and its equivalence series resistance (ESR) 28. The equivalence series resistance 28 occurs during cold operation and is effectively 1.5 to 2 ohms for a 4,700 μF aluminium electrolytic capacitor.

Normally, the output voltage of voltage step-up circuit 22 is greater than the ignition voltage supplied to line 20, therefore the regulating voltage supply 36 and current source 40 receive power through diode 32. Diode 30 provides a redundant path for power in the event of a failure in voltage step-up circuit 22. When necessary, reserve capacitor 24 powers voltage regulator 36, microprocessor 38, current source 40 and squib 42 via diode 32.

Referring now to Figure 3A, the voltage across capacitor 24 is represented by graph 46 during a deployment event with a time, $t_0$, at which the vehicle supply voltage is cut off from the supplemental inflatable restraint system. Between time $t_0$ and $t_1$, the microprocessor 38 is processing the data of a sudden deceleration event for which its internal discriminating routines determine whether deployment of the supplemental inflatable restraint system is necessary.

At time $t_1$, which microprocessor 38 determines is the optimal time to activate current source 40, a pulse 48 (Figure 3B) is applied to the control input of current source 40 to drive squib 42. The pulse at current source 40 has a predetermined length between times $t_1$ and $t_2$, which length is known to be sufficient to activate the squib 42. For example, for a squib rated for 2 ms of 2 amperes of current, a constant current of 2 amperes is desired to be provided for 2.5 ms. Therefore, the time period between $t_1$ and $t_2$ is 2.5 milliseconds.

During the time period between $t_0$ and $t_1$, microprocessor 38 runs from power supplied by reserve capacitor 24, slowly draining the reserve capacitor energy, as shown by the gradual decline in voltage across the reserve capacitor. At time $t_1$, when current source 40 is activated, the large 2 ampere current draw by current source 40 causes the instantaneous voltage drop across the effective ESR resistance 28 to rise, which in turn causes a drop in capacitor voltage, as shown.

Due to the increased current drawn from energy reserve capacitor 24 when current source 40 is activated, energy reserve in capacitor 24 decreases at a faster rate between time $t_1$ and $t_2$ than before time $t_1$ or after time $t_2$. At time $t_2$, the signal on line 39 shuts off current source 40. When current source 40 shuts off, the reduction in the load across the ESR 28 of capacitor 24 results in a rise of the voltage across capacitor 24, as shown at time $t_2$.

The remaining energy reserve of capacitor 24 powers microprocessor 38, which records the deployment event until time $t_3$, when capacitor 24 no longer has sufficient power to power microprocessor 38. Ideally, the time $t_0$ to $t_3$ is at least 500 ms.

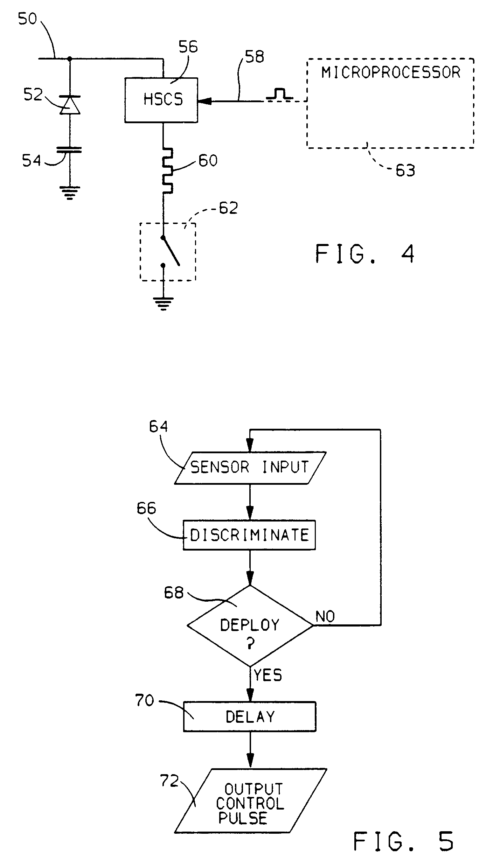

Referring to Figure 4, the circuit shown comprises, in series, controllable current source 56 connected to squib 60, which is connected to electromechanical sensor 62. The whole series circuit is connected between the current supply line 50 and ground. Actuation current is provided on line 50 either from the vehicle power supply or from energy reserve capacitor 54 through diode 52. Controllable current source 56 is controlled through line 58 with a pulse of predetermined duration from a control unit such as microprocessor controller 38 of Figure 2. Electromechanical sensor 62 may be any electromechanical sensor known to those skilled in the art for signalling sudden deceleration of a vehicle, as a result of which it is desirable to deploy the supplemental inflatable restraint system.

The advantage of the circuit apparatus shown on Figure 4 is twofold. First, two criteria are required to deploy the supplemental inflatable restraint. The first criterion is the closing of electromechanical sensor 62, which is time proven and reliable in both its simplicity and accuracy. The second criterion is a decision by the system controller to provide a pulse on line 58. The decision by the controller may be responsive to a second acceleration sensor, such as a continuous range transducer type. The two criteria provide a unique redundancy in decision making. The first decision being at the closure of the electromechanical sensor 62 and the second decision being to provide a pulse on line 58. This system can help to prevent undesirable deployment of the system by requiring a redundant decision and by providing a system for which a single mode of failure cannot cause deployment of the supplemental inflatable restraint.

A second advantage of the apparatus shown in Figure 4 is an implementation of electromechanical sensor 62 that does not destroy the switch contacts of sensor 62 through arcing upon closing. More particularly, this system may be implemented so that during a sudden deceleration of the vehicle in which it is desirable to deploy the supplemental inflatable restraint system, the electromechanical sensor 62 closes before a pulse is provided on line 58 to the controllable current source 56. In such an implementation, when electromechanical sensor 62 closes, there is no current supplied by the controllable current source 56 and therefore no current to arc the electrodes of the switch of sensor 62. After a very short delay, the system controller then provides a pulse on line 58 to controllable current source 56, which in response sends current to the squib 62, which current travels to ground through sensor 62 providing deployment of the supplemental inflatable restraint system.

Figure 5 illustrates a flow chart for a control routine. At step 64 the controller receives sensor inputs indicative of the acceleration state of the vehicle. The sensor inputs may be provided from an acceleration sensor in a manner well known to those skilled in the art. Known acceleration sensors include semiconductive, piezoresistive and capacitive devices which output signals proportional to the acceleration of the vehicle, and also include, more simply, two-state acceleration sensors such as electromechanical devices of the type used as sensor 62 in Figure 4.

In response to the sensor inputs, the controller discriminates the input signal in a manner well known to those skilled in the art at step 66 to determine if the supplemental inflatable restraint system should be deployed. At step 68, if a deployment decision has not been made, the routine moves back to step 64 to await new sensor input data. If a deployment decision is made, the routine moves to step 70 where a slight delay of the order of 100 microseconds occurs to allow full closing of the electromechanical sensor 62 and/or to optimise the time of deployment. At step 72, the control pulse is provided to the controllable current source, such as current sources 14, 40 and 56 described above, to deploy the supplemental inflatable restraint system. The pulse output at step 72 has a predetermined duration to drain only a predetermined amount of stored energy from the energy reserve capacitor.

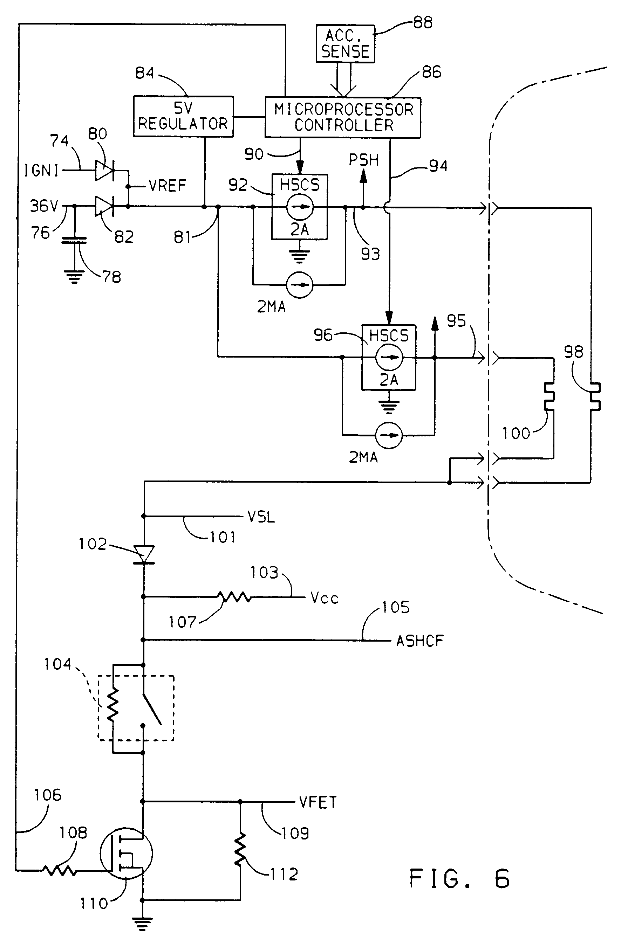

Referring to Figure 6, a multiple unit supplemental inflatable restraint system is shown. The system shown includes microprocessor 86, regulated voltage supply 84, controllable current sources 92 and 96, deployment squibs 98 and 100, electromechanical actuator 104 and an FET 110.

In general, the system shown is powered from the 36 volt supply voltage on line 76 through diode 82, which 36 volt supply voltage is provided by a voltage step-up circuit (not shown) coupled to the vehicle supply voltage. In the event of disconnection of the vehicle supply voltage, capacitor 78, normally charged to 36 volts by line 76, is used as the energy reserve for the system, providing power through diode 82 to node 81. Voltage regulator 84, coupled to node 81, provides a regulated voltage to microprocessor 86, providing power to microprocessor 86 during both normal operating conditions and conditions during which the battery has been disconnected but reserve energy is still stored in capacitor 78.

Microprocessor 86 processes sensor information and generally monitors the state of the supplemental inflatable restraint system. Sensor monitoring and deployment determination is implemented in manners well known to those skilled in the art, and may be responsive to an acceleration sensor 88 of known type.

Lines 101, 105 and 109 are provided for diagnosis of the system. During system diagnostics, a small current is provided on lines 93 and 95 and the voltage levels on lines 105 and 109 are monitored to determine whether or not a disconnection has occurred somewhere in the electromechanical actuator circuit. Also, during a deployment event, lines 93, 95, 101, 105 and 109 provide signals to microprocessor 86 for recording of the deployment event.

During a sudden deceleration of the vehicle for which it is desirable to deploy the two supplemental inflatable restraints, electromechanical actuator 104 closes. Also in response to the sudden deceleration, microprocessor 86 outputs a signal on line 106 via resistor 108 to FET 110, forward biasing FET 110 so that current may flow from actuator 104 to ground. The microprocessor then provides, through lines 90 and 94, current pulses of predetermined duration to activate the controllable current sources 92 and 96, activating squibs 98 and 100 respectively.

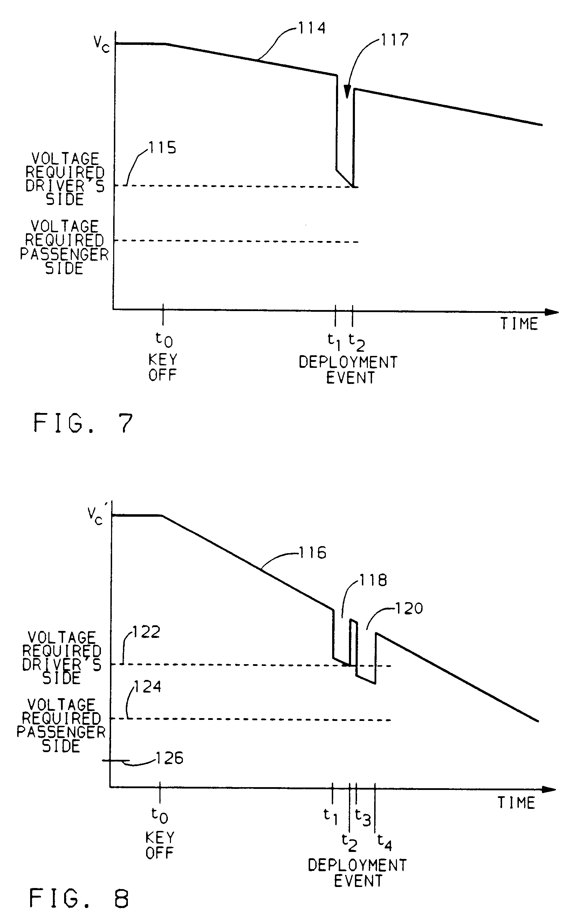

Referring to Figures 7 and 8, energy management of the reserve capacitor for the system shown in Figure 6 may be understood. In Figure 7, graph 114 illustrates the voltage across the reserve capacitor during a deployment condition in which the vehicle supply voltage is disconnected and in which both driver and passenger squibs are activated at the same time. During activation of the two squibs, the sudden current drawn through the system causes a large voltage drop in capacitor 78 due to the high current drawn across the ESR of capacitor 78 between times $t_1$ and $t_2$, as shown by portion 117 of the graph.

In order to maintain the required current to current sources 92 and 96, capacitor 78 must be charged at a high enough voltage and be of large enough size so that for the entire time period from $t_1$ to $t_2$ there is enough voltage across capacitor 78 to ensure that each of the current sources 92 and 96 provide sufficient amount of current to the squibs 98 and 100 for a sufficient amount of time. Line 115 represents the minimum acceptable voltage across capacitor 78 during deployment of the squibs.

Referring now to Figure 8, staggered deployment of the squibs 98 and 100 occurring at times $t_1$ and $t_3$, allows for more efficient energy management of the reserve capacitor 78, a lower capacitor charge voltage Vc' and a smaller size capacitor 78.

Graph 116 illustrates the voltage across capacitor 78 during a deployment condition after disconnection of the vehicle supply voltage at time $t_0$. Line 122 represents the minimum voltage required to deploy individually the driver-side squib and line 124 represents the minimum voltage across capacitor 78 to deploy individually the passenger-side squib. Minimum voltage levels 122 and 124 are different because, in many systems, the driver-side and passenger-side total impedance are different and therefore require different voltage levels to ensure the 2 amperes of current during deployment. If, however, the driver-side and passenger-side circuits are of the same impedance, lines 122 and 124 will be at identical levels.

In Figure 8, the capacitor is initially charged to its normal voltage level of Vc', for example 36 volts, until at time $t_0$ the vehicle voltage supply is disconnected due to a sudden deceleration of the vehicle. From the time $t_0$ to $t_1$, the microprocessor processes the sensor inputs and decides to deploy the supplemental inflatable restraint system. From time $t_1$ to time $t_2$, a pulse is provided on line 94 to current source 96, which pulse provides at least two amperes of current to squib 100 for the limited time period between $t_1$ and $t_2$. At time $t_2$, the pulse on line 94 is terminated and after a short delay before time $t_3$, a pulse on line 90 is provided to current source 92, which provides 2 amperes of current to passenger squib 98 to deploy the passenger-side supplemental inflatable restraint. The pulse on line 90 is provided from time $t_3$ to time $t_4$ and is terminated at time $t_4$, terminating current flow through current source 92. From time $t_4$ until the voltage across capacitor 78 reaches level 126, the microprocessor 86 continues to function from the reserve energy in capacitor 78 and records the signal levels during the deployment event.

An advantage achieved by staggered deployment of the supplemental inflatable restraint system is a lower necessary voltage across the energy reserve capacitor. When two squibs are simultaneously activated, the current drawn from capacitor 78 is doubled. Likewise, the effect of ESR in capacitor 78 is increased, causing a large voltage drop at time $t_1$ in Figure 7. However, when the squibs are activated independently, the current drawn is limited to half the simultaneous activation current, which limits the effect of ESR in capacitor 78, and as a result limits the voltage drops occurring at times $t_1$ and $t_3$ in Figure 8. The smaller voltage drops occurring during deployment reduces the necessary charge voltage across capacitor 78 immediately before deployment.

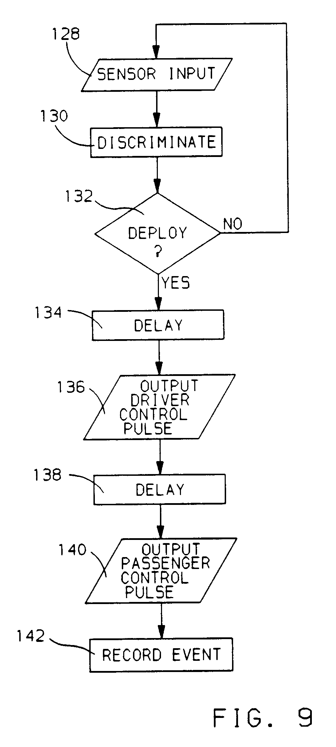

Referring to Figure 9, an embodiment of flow chart for use in the circuit of Figure 6 is shown. At steps 128, 130 and 132, the microprocessor control unit 86 receives sensor input from sensors monitoring deceleration of the vehicle, discriminates the input signals (step 130) and determines whether or not to deploy the supplemental inflatable restraint system (step 132). The routine moves through step 134 where a slight delay is provided to ensure closing of the electromechanical sensor 104 and to optimise deployment time of the supplemental inflatable restraint system. At step 136, a control pulse of limited duration is provided on line 94 to controllable current source 96, activating driver-side squib 100, which deploys driver-side supplemental inflatable restraint.

At step 138, a very short delay is incorporated to separate the deployment of the driver-side squib and the deployment of the passenger-side squib at step 140. At step 140, a pulse of limited duration is provided on line 90 to controllable current source 92, which provides 2 amperes of current to passenger-squib 98, activating squib 98 and deploying the passenger-side supplemental inflatable restraint. In this manner of providing the output pulses to the controllable sources 92 and 96 for limited durations and in a staggered manner, the energy of capacitor 78 can be efficiently managed and the power drainage from capacitor 78 can be predetermined for deployment.

At step 142, the microprocessor 86 continues to function from the reserve energy in capacitor 78, recording the signal levels in the supplemental inflatable restraint system until capacitor 78 no longer has sufficient energy to power microprocessor 86. Example pulse durations of the control pulses to the controllable current sources are 2.5 milliseconds.

Staggering the deployment in the system shown on Figure 6 reduces the current draw from capacitor 78 at any single deployment time from, for example, 4.4 amperes to 2.2 amperes (approximations including a safety margin). The drop in the capacitor voltage during deployment, for example references 117, 118 and 120 in Figures 7 and 8, is due to the ESR of the capacitor that occurs during a high current draw condition. The voltage required by capacitor 78 for simultaneous deployment, such as illustrated in Figure 7, is equal to:

$$V_{req} = V_{as} + V_{dr} + V_{sat} + V_{esr},$$

where $V_{as}$ is the voltage drop across the electromechanical sensor, $V_{dr}$ is the voltage drop across the driver side deployment circuit, $V_{sat}$ is the current source saturation voltage drop and $V_{esr}$ is the voltage drop due to the capacitor's ESR. Assuming a sensor impedance of 0.075 ohms, a driver side circuit impedance of 3.435 ohms, a saturation voltage for the current source of 2 volts and an ESR of 1.5 ohms, the required voltage, $V_{req}$, is 16.577 volts.

Assuming a voltage drop during energy reserve time of (0.18 Amp-seconds)/C, a voltage drop during simultaneous deployment of (4.46 Amps*0.002 seconds)/C, and an initial voltage of 33.15 volts, the minimum capacitance for capacitor 78 can be shown to be 11,399 $\mu$F.

However, for staggered deployment:

$$V_{req} = V_{as} + V_{dr} + V_{sat} + V_{esr},$$

where only 2.2 amperes of current is flowing through the sensor and deployment circuit and 2.26 effectively across the ESR, $V_{req}$ can be shown to equal 13.112 volts. Assuming a voltage drop during driver side deployment of (2.26 amps * 0.002 seconds)/C, and everything else similar to the analogous example above, the minimum capacitance for capacitor 78 can be shown to be 9,209 $\mu$F. Since the passenger deployment circuit impedance is less than the driver deployment circuit impedance, the passenger side circuit would require an even smaller capacitor 78. However, the circuit with the highest impedance determines the actual minimum capacitance to be used. Thus, in this example, a reduction of almost 20% in the minimum required capacitance for capacitor 78 can be provided.

As can be seen, staggering the deployment results in a decreased capacitor size for the energy reserve capacitor. If desired, capacitor size may be traded off against initial charge voltage, that is a higher initial charge voltage results in a reduced necessary capacitor size.

Referring to Figure 10, a preferred implementation of the controlled current source is shown. Line 209 is coupled to the current supply, for example, line 34 in Figure 2, and output line 310 connects to and powers the squib, such as squib 42 in Figure 2. The controlled current source works as follows.

Lines 328, 330 and 332, the ENABLE, INPUT A and INPUT B lines, control logic gates 312-326 selectively to turn on the IC current sources 268, 278, 282 and 284 in the manner described below to control the circuit's 2 A, 150 mA, 10 mA and 2 mA current sources. Current sources 268, 278, 282 and 284 act as current sinks for transistors 248, 266, 286 and 302 whose emitters are coupled to the Darlington pair transistors (258, 260), (274, 276), (292, 294) and (304, 306) as shown. Turning off current sources 268, 278, 282 and 284 turns off their above-mentioned Darlington pair transistors, thereby turning off the power supplies.

Resistors 256, 264, 280 and 296 in series act as the current sensing resistors for the current source. Resistor 256 controls the 2 amp output of transistors 258 and 260 to line 310. The series combination of resistors 256 and 264 controls the 150 milliamp output of transistors 274 and 276 to line 310. The series combination of resistors 256, 264 and 280 controls the 10 milliamp output of transistors 292 and 294 to line 310 and the series combination of resistors 256, 264, 280 and 296 controls the 2 milliamp output of transistors 304 and 306 to line 310. The Darlington transistors are biased through current sources 252, 254, 270, 272, 288, 290, 298 and 300 as shown.

The circuit comprising amplifiers 222 and 232, biased by voltage bias sources 220 and 234, control transistors 224 and 230 to set up a bias voltage across resistor 218. Resistors 226 and 228 may trimmed to set the bias voltage and resistor 226 may be temperature-sensitive to provide temperature stabilisation to the circuit.

In brief, regulated current is provided on line 310 by maintaining the voltage drop across resistors 256, 264, 280 and 296 (the sense resistors) equal to the bias voltage across resistor 218, which may also be a trimmable resistor. Amplifier 236 is responsive to the error between the bias voltage across resistor 218 and the voltage across the resistor series of the sense resistors and controls transistor 246 in response thereto.

Transistor 246 is operatively associated with current source 244 and controls the control transistors 248, 266, 286 and 302. When the current across the sense resistors 256, 264, 280 and 296 is greater than desired, the resultant increased voltage drop across the sense resistors raises the output of amplifier 236, partially shutting off transistor 246. Transistor 246, in turn, partially turns on control transistors 248, 266, 286 and 302, which affects a regulation of the current output of the Darlington pair transistors (258, 260), (274, 276), (292, 294), and (304, 306).

The circuit operates as follows. When line 328 is low, only the 2 milliamp current output from transistors 304 and 306 is enabled. When line 328 is high and lines 330 and 332 are low, only the 10 milliamp output of Darlington transistors 292 and 294 is enabled. When line 328 is high, line 330 is low and line 332 is high, only the 150 milliamp output of Darlington transistors 274 and 276 to line 310 is enabled. When line 328 is high, line 330 is high and line 332 is low, only the 2.11 amp output of Darlington transistors 258 and 260 to line 310 is enabled. When all three lines 328, 330 and 332 are high, all of the current sources are off.

Current mirror 208 supplies current to transistors 248 and 266 and is, itself, biased by current source 216. Line 202 is normally high during standard operation of the circuit and is biased by current source 210 and transistors 212 and 214. However, operational amplifier 204, with the inverting input biased by voltage bias 206, is responsive to the output voltage level of line 310 which, when rising above the bias level set by voltage bias 206, indicates that the circuit is in saturation and cannot provide the regulated current output. In such a state, transistor 203 is forward biased bringing line 202 low for an indication of circuit saturation.

Reverse bias shut down is provided by amplifier 238 and unit 240. When the current source is reverse biased, line 310 rises above the voltage at line 209. This causes a high output from amplifier 238 which triggers bias shut down circuitry 240, which is standard circuitry easily implemented by those skilled in the art, to shut down operation of the IC.

Unit 242 is a standard thermal-sensitive circuit which controls thermal shut down of the IC. Unit 242 includes a temperature sensitive VVE transistor coupled to a voltage comparator that outputs a high signal when the temperature of the circuit rises above 150° Celsius. Such circuits are standard and well known to those skilled in the art. The high signal from unit 242 sets flip-flop 250 whose output, inverted by invertor 262, shuts down current source 268 inhibiting output of the 2 amp current source transistors 258 and 260. Flip-Flop 250 cannot be reset until line 328 goes low and then goes high again. Given a supplemental inflatable restraint system in which the squib is designed to be activated after 2 millisecond of 2 ampere current. Thermal shut down should be set so as to not occur for at least 4-7 milliseconds of operation of the 2 amp current source.

In normal operation, the 2 milliamp current source is activated to set up a bias through the supplemental inflatable restraint system for system diagnostic purposes. The 150 milliamp current source may be activated with the 1 Hz, 5% duty cycle square wave for 4 pulses after every ignition cycle to test the impedance of the squib. The circuit in Figure 10 may be easily implemented by those skilled in the art to be controlled by a microprocessor or other type of control unit, given the above description.

The disclosures in United States patent application no. 033,736, from which this application claims priority, and in the abstract accompanying this application are incorporated herein by reference.

Other aspects of the present invention are provided in our co-pending European patent applications (RJ/G-7336) and (RJ/G-7337).

**Claims**

1. A supplemental inflatable restraint system comprising a vehicle voltage supply terminal (20) coupled to a supply node (34) through a diode (30); a step-up voltage supply (22) coupled between the vehicle voltage supply terminal and a single reserve capacitor (26); a diode (32) coupling the single reserve capacitor to the supply node; a regulated voltage supply (36) coupled to the supply node for supplying power to a controller (38); a controllable current source (40) coupled to receive power from the supply node and coupled to the controller through a control line (39); a deployment squib (42) in series with the controllable current source; the controller being operative to control the controllable current source to provide electric current from the supply node to the squib to deploy the supplemental inflatable restraint system, wherein the single reserve capacitor is operative to supply reserve energy to the regulated voltage supply, the controllable current source, the microprocessor controller and the squib.

2. A method of deploying a supplemental inflatable restraint system comprising the steps of coupling a vehicle power supply and a single energy reserve capacitor (26) to a supply node (34); and in the event of disconnection of the vehicle power supply, providing power to a control unit (38), to a first current source (40,92) for a first squib (42,98) and to the first squib solely from the single energy reserve capacitor.

3. A method according to claim 2, comprising the step of, in the event of a disconnection of the vehicle power supply, providing power to a second current source (96) for a second squib (100) and to the second squib solely from the single energy reserve capacitor.

FIG. 1

FIG. 2

FIG. 3a

FIG. 3b

FIG. 4

FIG. 5

FIG. 6

FIG. 7

FIG. 8

128
SENSOR INPUT

130
DISCRIMINATE

132
DEPLOY
?

NO

YES

134
DELAY

136
OUTPUT
DRIVER
CONTROL
PULSE

138
DELAY

140
OUTPUT
PASSENGER
CONTROL
PULSE

142
RECORD EVENT

FIG. 9

FIG. 10

EP 0 615 887 A1

## DOCUMENTS CONSIDERED TO BE RELEVANT

| Category | Citation of document with indication, where appropriate, of relevant passages | Relevant to claim | CLASSIFICATION OF THE APPLICATION (Int.Cl.5) |
|---|---|---|---|
| Y | WO-A-90 02062 (BOSCH)<br>* page 3, line 28 - page 5, line 8; figures 1,5 * | 1 | B60R21/00 |
| Y | WO-A-90 02672 (BOSCH)<br>* page 2, line 24 - line 32; figure 1 * | 1 | |
| X | WO-A-89 04779 (BOSCH)<br>* page 3, line 9 - page 6, line 23; figure 2 * | 2,3 | |
| A | EP-A-0 344 788 (NIPPONDENSO)<br>* column 5, line 17 - column 7, line 45; figures 1,4 * | 1 | |
| A | US-A-5 046 149 (DOUGLAS A. NUNAN)<br>* the whole document * | 1 | |
| A | US-A-5 155 376 (MASAMI OKANO)<br>* the whole document * | 1 | TECHNICAL FIELDS SEARCHED (Int.Cl.5)<br><br>B60R |

The present search report has been drawn up for all claims

| Place of search | Date of completion of the search | Examiner |
|---|---|---|
| THE HAGUE | 17 June 1994 | Waldorff, U |

EPO FORM 1503 03.82 (P04C01)